# FASCICULE DE BREVET EUROPEEN

(11) **EP 3 324 349 B1**
(45) Date de publication et mention de la délivrance du brevet: **23.08.2023**
(21) Numéro de dépôt: 17201507.5
(22) Date de dépôt: 14.11.2017
(51) Int. Cl.: G06Q 10/06

(54) **PROCÉDÉ DE SÉQUENCEMENT DE CHARGES DANS UN SYSTÈME DE DISTRIBUTION AUTOMATISÉ**
VERFAHREN ZUR TAKTUNG VON LADUNGEN IN EINEM AUTOMATISCHEN VERTEILUNGSSYSTEM
METHOD FOR SEQUENCING LOADS IN AN AUTOMATED TIMING SYSTEM

(30) Priorité: 16.11.2016 FR 1661103
(43) Date de publication de la demande: 23.05.2018
(73) Titulaire: Savoye, 21000 Dijon (FR)
(72) Inventeur: COLLIN, Jean-Michel, 21190 MERCEUIL (FR)
(74) Mandataire: Vidon Brevets & Stratégie

(56) Documents cités:
- FR-A1- 2 915 979

## Description

### 1. DOMAINE TECHNIQUE

Le domaine de l'invention est celui de la logistique, et en particulier celui des systèmes de distribution automatisé, notamment, mais non exclusivement, pour la préparation de commandes (aussi appelée « préparation de colis »).

Plus précisément, l'invention concerne un procédé de séquencement de charges dans un tel système de distribution automatisé.

On suppose que le système de distribution automatisé comprend des sources, au moins une destination, un collecteur et un système de pilotage. Le collecteur est configuré pour transporter des charges jusqu'à chaque destination et comprend une pluralité de noeuds successifs configurés chacun pour collecter des charges sortant d'une des sources.

Le système de pilotage est configuré pour :
- traiter des commandes listant chacune des charges à extraire des sources et à fournir dans un ordre de destination croissant donné à une destination donnée ;
- définir un ordre global croissant pour les charges listées dans les commandes ; et
- garantir pour chaque source que des charges sortantes respectent l'ordre global croissant et les ordres de destination croissants associés aux commandes.

Le système de pilotage (aussi appelé SGE, pour « Système de Gestion d'Entrepôt », ou WCS, pour « Warehouse Control System » en anglais) est un système informatique de gestion central, ayant en charge le pilotage de l'ensemble du système de distribution automatisé, ainsi que la gestion des commandes.

Le traitement (ou gestion) d'une commande donnée regroupe toutes les actions menées par le système de pilotage pour piloter le système de distribution automatisé (y compris les sources) afin que toutes les charges listées dans cette commande donnée arrivent à la destination souhaitée dans l'ordre de destination souhaité.

L'invention s'applique notamment, mais non exclusivement, dans le cas où chaque source du système de distribution automatisé est une partie d'un magasin de stockage (cette partie est aussi appelée « ensemble de rangement » dans la suite de la description) et chaque destination du système de distribution automatisé est un poste de préparation de commande (aussi appelé « poste de picking »).

Il est clair cependant que de nombreuses variantes peuvent être envisagées sans sortir du cadre de la présente invention : par exemple, chaque source peut être définie comme un magasin de stockage, voire comme un ensemble comprenant plusieurs magasins de stockage, ou encore comme un dispositif de stockage (moins complexe qu'un magasin de stockage).

### 2. ARRIÈRE-PLAN TECHNOLOGIQUE

On s'attache plus particulièrement dans la suite de ce document à décrire la problématique existant dans le cas particulier où le système de distribution automatisé est utilisé pour la préparation de colis. L'invention ne se limite bien sûr pas à cette application particulière.

Les systèmes de préparation de colis sont plus particulièrement utilisés dans les entreprises d'expédition et de vente à distance de produits de petit volume. Les principaux exemples d'utilisateurs de ces systèmes automatisés de préparation de colis sont les fournisseurs de matériels de bureau, de vêtements, de produits cosmétiques, d'outillages ou de pièces détachées dans l'industrie mécanique. Ces systèmes permettent de préparer avec un minimum de main-d'oeuvre, dans un délai court et avec un suivi précis des stocks, un colis correspondant à une commande précise d'un client, cette commande portant sur plusieurs produits en différentes quantités, chacun des produits avec sa quantité étant identifié par une ligne de la commande (chaque ligne de la commande défini un contenant de stockage dans lequel se trouve le produit souhaité).

Un exemple d'un tel système automatisé de préparation de colis est décrit notamment dans le brevet FR 2 915 979 déposé par la demanderesse ?. Il comprend par exemple :
- un magasin de stockage automatisé renfermant les produits dans des contenants de stockage (correspondant aux charges précitées), chaque contenant de stockage étant associé à une référence unique de produit (ce peut être aussi des contenants renfermant une commande spécifique ou un mélange de produits) ;
- un poste de préparation de commande, où les produits sont prélevés et placés par un opérateur dans un colis (contenant d'expédition) ;
- un ensemble de convoyeurs amenant les contenants de stockage, dans lesquels se trouvent les produits, du magasin de stockage au poste de préparation de commande ou d'expédition et réciproquement ; et
- un système de pilotage (WCS).

Le magasin de stockage automatisé comprend par exemple quatre ensembles de rangement, chaque ensemble de rangement étant formé d'une allée desservant de part et d'autre une étagère de stockage (ou rayonnage) à plusieurs niveaux de rangements superposés, chaque étagère étant subdivisée sur sa longueur en emplacements de stockage (également appelés cellules) destinés à accueillir chacune un contenant de stockage. Chaque allée reçoit, à chaque niveau de rangement, des voies pour le déplacement d'un dispositif de transfert (également appelé chariot de collecte et de transport ou navette) qui assure le déplacement des contenants de stockage, pour leur mise en place à l'intérieur des emplacements de stockage et pour leur prélèvement depuis ces emplacements. Une voie est généralement formée de deux rails parallèles et le chariot est équipé de roues pour se déplacer sur ces rails. Les chariots peuvent non seulement se déplacer horizontalement à un niveau de rangement donné, mais aussi être amenés d'un niveau à un autre d'une allée, lorsqu'ils transportent ou non un contenant de stockage, par des élévateurs (également appelés élévateurs/descendeurs, convoyeurs en spirale, mini-transstockeurs (« mini-loads » en anglais), etc.) qui sont disposés à une ou aux deux extrémités des allées (voire au milieu). Ces élévateurs permettent en outre le transfert d'un contenant de stockage placé sur un chariot vers l'ensemble de convoyeurs.

Le système de pilotage gère la commande associée à chaque colis (contenant d'expédition) et listant des contenants de stockage (charges), en fonction de l'emplacement de ces contenants de stockage dans le magasin de stockage, de la disponibilité des chariots et des élévateurs du magasin de stockage, ainsi que de l'ordre de destination (aussi appelé « ordre poste ») dans lequel ces contenants de stockage doivent se succéder au poste de préparation de commande. Ceci a pour but d'optimiser tous les déplacements et les temps de préparation des colis et d'assurer la synchronisation entre l'arrivée, au poste de préparation, d'un colis en préparation et des contenants de stockage listés dans la commande associée à ce colis en préparation.

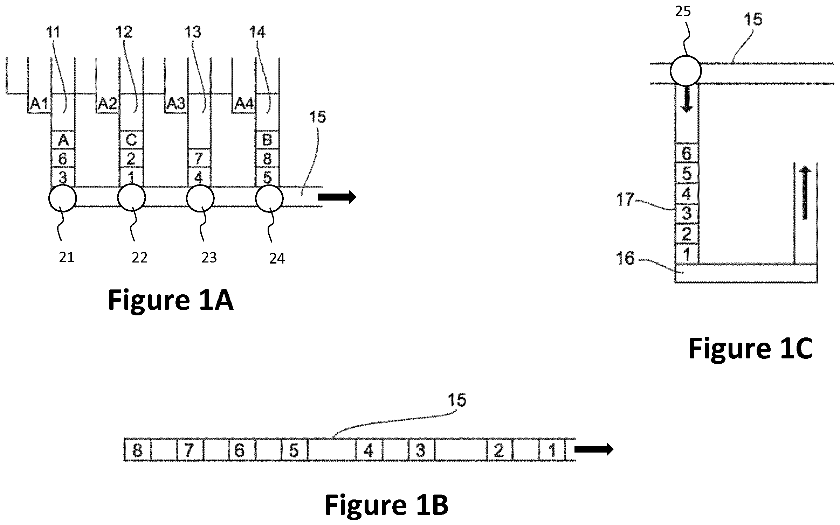

On présente maintenant plus en détail, en relation avec les **figures 1A, 1B et 1C**, une technique actuelle de traitement d'une commande (et de séquencement des charges correspondantes) par le système de pilotage, dans le contexte particulier (présenté ci-dessus) d'un système automatisé de préparation de colis. Dans un souci de simplification, tous les éléments constitutifs du système de distribution automatisé ne sont pas représentés sur ces figures.

La figure 1A présente uniquement :
- les extrémités de quatre ensembles de rangement A1 à A4, qui font partie du magasin de stockage automatisé et constituent quatre sources stockant des charges ;
- une pluralité de dispositifs tampons sources 11 à 14, de type FIFO (pour « First In First Out » en anglais, ou « premier entré premier sorti » en français) et placés chacun immédiatement en aval d'une de quatre sources A1 à A4 ; et
- un collecteur 15 (composé par exemple d'un ou plusieurs convoyeurs), collectant, via des noeuds 21 à 24, les charges sortant des dispositifs tampons sources 11 à 14 et les transportant jusqu'au poste de préparation de commande 16 (destination). Le collecteur 15 sert donc à délocaliser le poste de préparation de commande 16 par rapport au magasin de stockage automatisé. En effet, les bâtiments ne permettent pas toujours de disposer le poste préparation de commande à côté du magasin de stockage.
   La figure 1C présente uniquement :
- le collecteur 15 ;
- le poste de préparation de commande 16 (composé par exemple d'un ou plusieurs convoyeurs) et constituant une destination recevant des charges ; et
- un dispositif tampon destination 17, de type FIFO et placé en amont du poste de préparation de commande 16, pour recevoir des charges via un noeud 25.

Dans cet exemple, on suppose que la commande liste huit charges dans un ordre de destination donné, correspondant à l'ordre croissant des références 1 à 8 que ces charges portent sur les figures. En d'autres termes, le poste de préparation de commande 16 doit recevoir ces huit charges dans l'ordre de 1 à 8.

On suppose également que les charges référencées 3 et 6 sont stockées dans la source A1, les charges référencées 1 et 2 sont stockées dans la source A2, les charges référencées 4 et 7 sont stockées dans la source A3, et les charges référencées 5 et 8 sont stockées dans la source A4.

Pour traiter la commande précitée, le système de pilotage effectue un premier ordonnancement « intra-source » (ordonnancement avant la sortie des sources), en commandant chacune des sources A1 à A4 pour que les charges de la commande qui y sont stockées en sortent conformément à l'ordre de destination donné. Ainsi, comme illustré sur la figure 1A, le dispositif tampon source 11 (placé en aval de la source A1) reçoit successivement les charges référencées 3 et 6. Le dispositif tampon source 12 (placé en aval de la source A2) reçoit successivement les charges référencées 1 et 2. Le dispositif tampon source 13 (placé en aval de la source A3) reçoit successivement les charges référencées 4 et 7. Le dispositif tampon source 14 (placé en aval de la source A4) reçoit successivement les charges référencées 5 et 8.

Puis, le système de pilotage effectue un deuxième ordonnancement « inter-sources » (ordonnancement après la sortie des sources), en commandant les dispositifs tampons sources 11 à 14 et les noeuds 21 à 24 pour qu'en sortie du collecteur 15 les charges listées dans la commande soient rangées dans l'ordre de destination souhaité. Pour cela, des règles de décision (règles d'injection et d'avance) sont appliquées au niveau de chacun des noeuds 21 à 24 :
- règles d'injection, pour une charge se présentant à un noeud en provenance d'une des sources A1 à A4 (via un des dispositifs tampons sources 11 à 14) :
   o la charge est injectée sur le collecteur 15, en aval de ce noeud, si ce noeud est celui le plus en amont des destinations ;
   o pour un noeud autre que celui le plus en amont des destinations, la charge est injectée si aucune autre charge ayant un numéro d'ordre de destination inférieur n'est présente en amont de ce noeud, dans un des dispositifs tampons sources ou sur le collecteur, et si aucune autre charge ayant un numéro d'ordre de destination inférieur n'est présente en aval de ce noeud, dans un des dispositifs tampons sources reliés aux autres noeuds (sinon elle n'est pas injectée) ;
   o par exemple, même si elle est prête à sortir du dispositif tampon source 13 via le noeud 23, la charge référencée 4 n'est pas injectée sur le collecteur 15 tant que les charges référencées 1, 2 et 3 sont situées en amont du noeud 23, dans un des dispositifs tampons sources 21 et 22 ou sur le collecteur 15 ; et
- règle d'avance, pour une charge déjà présente sur le collecteur 15 et se présentant à un noeud (en provenance d'un autre noeud en amont) :
   o la charge avance si aucune autre charge ayant un numéro d'ordre de destination inférieur n'est présente dans le dispositif tampon source relié à ce noeud (sinon elle n'avance pas) ;
   o par exemple, si on suppose que la charge référencée 3 a été placée (injectée) sur le collecteur 15, alors quand elle va se présenter au noeud 22 elle ne va pas avancer tant que les charges référencées 1 et 2 sont situées dans le dispositif tampon source 12 relié à ce noeud 22.

La figure 1B illustre les charges référencées 1 à 8 en cours de transport par le collecteur 15, après y avoir été placées dans l'ordre de destination voulu (de 1 à 8).

Enfin, comme illustré sur la figure 1C, le système de pilotage commande le dispositif tampon destination 17 pour que les charges (qui y entrent, via le noeud référencé 25, déjà triées selon l'ordre de destination voulu) en ressortent au rythme souhaité pour être présentées au poste de préparation de commande 16.

Un inconvénient de la technique connue illustrée sur les figures 1A à 1C (et de ses règles d'injection et d'avance) est que le taux de remplissage du collecteur (et donc le débit en sortie de celui-ci) n'est pas optimal.

Il conviendrait donc de réduire les temps d'attente des charges, d'une part avant leur injection sur le collecteur via les noeuds et d'autre part avant leur avance sur le collecteur (également via les noeuds).

### 3. RÉSUMÉ

Dans un mode de réalisation particulier de l'invention, il est proposé un procédé de séquencement de charges selon la revendication 1.

Le principe général de l'invention consiste donc à faire une analyse plus fine que dans la solution connue précitée, pour décider si une charge C provenant d'une source peut être injectée au niveau d'un noeud analysé. Avec la solution proposée, en cas de réponse négative au premier test d'injection, le fait que la liste LI1 ne soit pas vide ne conduit pas systématiquement à une non injection de la charge. En effet, la solution proposée repose sur une approche tout à fait nouvelle et inventive consistant à tenir compte également de la liste LI2, pour détecter un éventuel inter-blocage entre charges. Si cette liste LI2 est vide, il n'y a pas de risque d'inter-blocage et la charge est injectée (le cas où cette liste LI2 n'est pas vide est détaillé ci-après). Ainsi, si la liste LI1 n'est pas vide mais la liste LI2 est vide, la solution proposée aboutit à une injection de la charge (tout en garantissant qu'il n'y a pas de risque d'inter-blocage), tandis que la solution connue précitée aboutit à une non injection de la charge. Donc, la solution proposée permet d'augmenter le taux de remplissage du collecteur (et donc le débit en sortie de celui-ci). Ceci permet également une réduction des temps d'attente des charges avant leur injection sur le collecteur, via les noeuds.]

Selon une caractéristique particulière, si aucune des première et deuxième conditions d'injection n'est vérifiée, l'étape d'analyse d'injection comprend :
a') troisième test d'injection pour déterminer s'il existe, en amont du noeud analysé, sur le collecteur ou parmi des charges à collecter par au moins un noeud en amont du noeud analysé, au moins une charge ayant un numéro d'ordre de destination inférieur à un numéro d'ordre de destination possédé par une charge de la liste LI2 et pour une même destination ;
b') en cas de réponse positive au troisième test d'injection, non injection de la charge C, sinon :
   * création, parmi des charges à collecter par au moins un noeud en aval du noeud analysé, d'une liste LI3 de charges ayant un numéro d'ordre de destination inférieur à un numéro d'ordre de destination possédé par une charge de la liste LI2 et pour une même destination, et d'une liste LI4 de charges qui sont chacune intercalée entre une charge de la liste LI3 et le collecteur ;
   * quatrième test d'injection pour déterminer si une des troisième et quatrième conditions d'injection suivantes est vérifiée : la troisième condition d'injection étant que la liste LI3 est vide ; la quatrième condition d'injection étant que la liste LI3 n'est pas vide et que la liste LI4 est vide ;
   * si une des troisième et quatrième conditions d'injection est vérifiée, injection de la charge C.

Ainsi, dans le cas où la liste LI2 n'est pas vide (ni par conséquent la liste LI1), on poursuit l'analyse pour décider si la charge C peut être injectée au niveau du noeud analysé. En cas de réponse négative au troisième test d'injection, on tient compte des listes LI3 et LI4 pour détecter un éventuel inter-blocage entre charges. Si une de ces deux listes LI3 et LI4 est vide, il n'y a pas de risque d'inter-blocage et la charge est injectée (le cas où la liste LI4 n'est pas vide est détaillé ci-après). Ceci permet d'augmenter encore le taux de remplissage du collecteur (et donc le débit en sortie de celui-ci) et de réduire encore les temps d'attente des charges avant leur injection sur le collecteur, via les noeuds.

Selon une caractéristique particulière, si aucune des troisième et quatrième conditions d'injection n'est vérifiée, l'étape d'analyse d'injection comprend au moins une nouvelle itération des étapes a') et b'), en prenant comme liste LI2 pour chaque nouvelle itération la liste LI4 de l'itération précédente.

Ainsi, dans le cas où la liste LI4 n'est pas vide (ni par conséquent la liste LI3), on poursuit l'analyse, par une nouvelle itération des étapes a') et b'), pour décider si la charge C peut être injectée au niveau du noeud analysé. A chaque itération, en cas de réponse négative au troisième test d'injection, on tient compte des listes LI3 et LI4 pour détecter un éventuel inter-blocage entre charges, et si une de ces deux listes LI3 et LI4 est vide, il n'y a pas de risque d'inter-blocage et la charge est injectée. Ceci permet d'augmenter encore le taux de remplissage du collecteur (et donc le débit en sortie de celui-ci) et de réduire encore les temps d'attente des charges avant leur injection sur le collecteur, via les noeuds.

Selon une caractéristique particulière, l'étape d'analyse d'injection est effectuée pour chacun des noeuds sauf un premier noeud le plus en amont des destinations.

De cette manière, on applique dans un grand nombre de noeuds la solution proposée pour l'injection des charges au niveau des noeuds.

Selon une caractéristique particulière, le procédé comprend, pour au moins un noeud analysé, une étape d'analyse d'avance comprenant les étapes suivantes, pour décider si une charge C', provenant d'un noeud en amont du noeud analysé et ayant un numéro d'ordre de destination donné pour une destination donnée, peut être avancée sur le collecteur :
1) premier test d'avance pour déterminer s'il existe, parmi des charges à collecter par le noeud analysé, au moins une charge ayant un numéro d'ordre de destination inférieur au numéro d'ordre de destination donné ;
2) en cas de réponse positive au premier test d'avance, non avance de la charge C', sinon :
   - création, parmi des charges à collecter par au moins un noeud en aval du noeud analysé, d'une liste LA1 de charges ayant un numéro d'ordre de destination inférieur au numéro d'ordre de destination donné, et d'une liste LA2 de charges qui sont chacune intercalée entre une charge de la liste LA1 et le collecteur ;
   - deuxième test d'avance pour déterminer si une des première et deuxième conditions d'avance suivantes est vérifiée : la première condition d'avance étant que la liste LA1 est vide ; la deuxième condition d'avance étant que la liste LA1 n'est pas vide et que la liste LA2 est vide ;
   - si une des première et deuxième conditions d'avance est vérifiée, avance de la charge C'.

Ainsi, en synergie avec la solution proposée pour l'injection des charges au niveau des noeuds, il est également proposé de faire une analyse plus fine que dans la solution connue précitée, pour décider si une charge C peut avancer sur le collecteur, au niveau d'un noeud analysé. La combinaison de la solution proposée pour l'injection des charges au niveau des noeuds avec la solution proposée pour l'avance des charges au niveau des noeuds permet d'augmenter le taux de remplissage du collecteur (et donc le débit en sortie de celui-ci) tout en garantissant une gestion globale des risques d'inter-blocage. Avec la solution proposée pour l'avance des charges, une réponse négative au premier test d'avance ne conduit pas systématiquement à une avance de la charge. En effet, la solution proposée repose sur une approche tout à fait nouvelle et inventive consistant à tenir compte également des listes LA1 et LA2, pour détecter un éventuel inter-blocage entre charges. Si une des listes LA1 et LA2 est vide, il n'y a pas de risque d'inter-blocage et la charge est avancée (le cas où la liste LA2 n'est pas vide est détaillé ci-après).

Selon une caractéristique particulière, si aucune des première et deuxième conditions d'avance n'est vérifiée, l'étape d'analyse d'avance comprend :
1') troisième test d'avance pour déterminer s'il existe, parmi des charges à collecter par le noeud analysé, au moins une charge ayant un numéro d'ordre de destination inférieur à un numéro d'ordre de destination possédé par une charge de la liste LA2 et pour une même destination ;
2') en cas de réponse positive au troisième test d'avance, non avance de la charge C', sinon :
   * création, parmi des charges à collecter par au moins un noeud en aval du noeud analysé, d'une liste LA3 contenant des charges ayant un numéro d'ordre de destination inférieur à un numéro d'ordre de destination possédé par une charge de la liste LA2 et pour une même destination, et d'une liste LA4 contenant des charges qui sont chacune intercalée entre une charge de la liste LA3 et le collecteur ;
   * quatrième test d'avance pour déterminer si une des troisième et quatrième conditions d'avance suivantes est vérifiée : la troisième condition d'avance étant que la liste LA3 est vide ; la quatrième condition d'avance étant que la liste LA3 n'est pas vide et que la liste LA4 est vide ;
   * si une des troisième et quatrième conditions d'avance est vérifiée, avance de la charge C'.

Ainsi, dans le cas où la liste LA2 n'est pas vide (ni par conséquent la liste LA1), on poursuit l'analyse pour décider si la charge C peut être avancée au niveau du noeud analysé. En cas de réponse négative au troisième test d'avance, on tient compte des listes LI3 et LI4 pour détecter un éventuel inter-blocage entre charges. Si une de ces deux listes LA3 et LA4 est vide, il n'y a pas de risque d'inter-blocage et la charge est avancée (le cas où la liste LA4 n'est pas vide est détaillé ci-après).

Selon une caractéristique particulière, si aucune des troisième et quatrième conditions d'avance n'est vérifiée, l'étape d'analyse d'avance comprend au moins une nouvelle itération des étapes 1') et 2'), en prenant comme liste LA2 pour chaque nouvelle itération la liste LA4 de l'itération précédente.

Ainsi, dans le cas où la liste LA4 n'est pas vide (ni par conséquent la liste LA3), on poursuit l'analyse, par une nouvelle itération des étapes 1') et 2'), pour décider si la charge C peut être avancée au niveau du noeud analysé. A chaque itération, en cas de réponse négative au troisième test d'avance, on tient compte des listes LA3 et LA4 pour détecter un éventuel inter-blocage entre charges, et si une de ces deux listes LA3 et LA4 est vide, il n'y a pas de risque d'inter-blocage et la charge est avancée.

Selon une caractéristique particulière, l'étape d'analyse d'avance est effectuée pour chacun des noeuds sauf ledit premier noeud le plus en amont des destinations.

De cette manière, on applique dans un grand nombre de noeuds la solution proposée pour l'avance des charges au niveau des noeuds.

Dans un mode de réalisation particulier de l'invention, il est proposé une utilisation d'un produit programme d'ordinateur comprenant des instructions de code de programme pour la mise en oeuvre du procédé précité (dans l'un quelconque de ses modes de réalisation), lorsque ledit programme est exécuté sur un ordinateur.

Dans un mode de réalisation particulier de l'invention, il est proposé une utilisation d'un médium de stockage lisible par ordinateur et non transitoire, stockant un produit programme d'ordinateur tel que précité.

Dans un autre mode de réalisation de l'invention, il est proposé un produit programme d'ordinateur qui comprend des instructions de code de programme pour la mise en oeuvre du procédé précité (dans l'un quelconque de ses différents modes de réalisation), lorsque ledit programme est exécuté sur un ordinateur.

Dans un autre mode de réalisation de l'invention, il est proposé un médium de stockage lisible par ordinateur et non transitoire, stockant un programme d'ordinateur comprenant un jeu d'instructions exécutables par un ordinateur pour mettre en oeuvre le procédé précité (dans l'un quelconque de ses différents modes de réalisation).

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- les figures 1A à 1C, déjà décrites en relation avec l'art antérieur, présentent une technique de traitement d'une commande (et de séquencement des charges correspondantes) par un système de pilotage, dans un système de distribution automatisé classique ;
- la figure 2 présente un synoptique d'un système de distribution automatisé dans lequel peut être mis en oeuvre un procédé de séquencement de charges selon l'invention ;
- la figure 3 présente un organigramme d'un algorithme d'analyse d'injection de charge, dans un mode de réalisation particulier du procédé de séquencement de charges de l'invention ;
- la figure 4 présente un organigramme d'un algorithme d'analyse d'avance de charge, dans un mode de réalisation particulier du procédé de séquencement de charges de l'invention ;
- la figure 5 illustre un premier exemple de contexte d'exécution de l'algorithme d'analyse d'injection de la figure 3 (au noeud N2 pour la charge référencée 9₆) et de l'algorithme d'analyse d'avance de la figure 4 (au noeud N2 pour la charge référencée 2₁₀) ;
- la figure 6 illustre et explicite les notions de mission, numéro d'ordre de destination et numéro d'ordre global, en rapport avec les charges du contexte d'exécution de la figure 5 ;
- la figure 7 illustre un deuxième exemple de contexte d'exécution de l'algorithme d'analyse d'avance de la figure 4 (au noeud N3 pour la charge référencée 9₆) ;
- la figure 8 illustre un troisième exemple de contexte d'exécution de l'algorithme d'analyse d'avance de la figure 4 (au noeud N3 pour la charge référencée 2₁₀) ; et
- la figure 9 présente la structure d'un système de pilotage selon un mode de réalisation particulier de l'invention.

### 5. DESCRIPTION DÉTAILLÉE

Sur toutes les figures du présent document, les éléments et étapes identiques sont désignés par une même référence numérique.

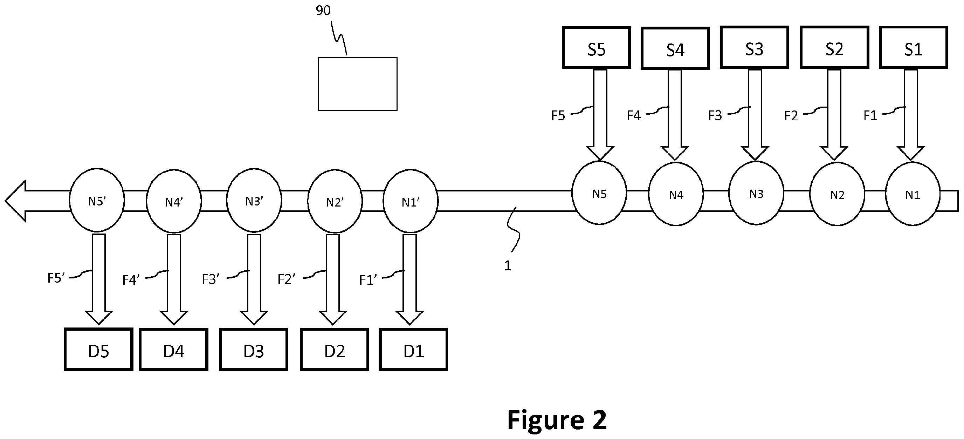

La **figure 2** présente un synoptique d'un système de distribution automatisé dans lequel peut être mis en oeuvre un procédé de séquencement de charges selon l'invention. Le système comprend des sources S1 à S5 (par exemple différentes parties (ensembles de rangement) d'un magasin de stockage), des destinations D1 à D5 (par exemple des postes de préparation de commande), un collecteur 1 (composé par exemple d'un ou plusieurs convoyeurs) et un système de pilotage 90 (par exemple de type WCS). Le nombre de sources et de destinations est purement illustratif.

Comme déjà expliqué plus haut, le collecteur 1 est configuré pour transporter des charges jusqu'à chaque destination et comprend une pluralité de noeuds successifs, ceux référencés N1 à N5 sont configurés chacun pour collecter des charges sortant d'une des sources S1 à S5, et ceux référencés N1' à N5' sont configurés chacun pour diriger des charges vers une des destinations D1 à D5. Chacun de ces noeuds comprend par exemple un dispositif de transfert à 90° ou 45°

Chacune des sources S1 à S5 est par exemple reliée à l'un des noeuds N1 à N5 par un dispositif tampon source de type FIFO F1 à F5. De même, chacune des destinations D1 à D5 est par exemple reliée à l'un des noeuds N1' à N5' par un dispositif tampon destination de type FIFO F1' à F5'.

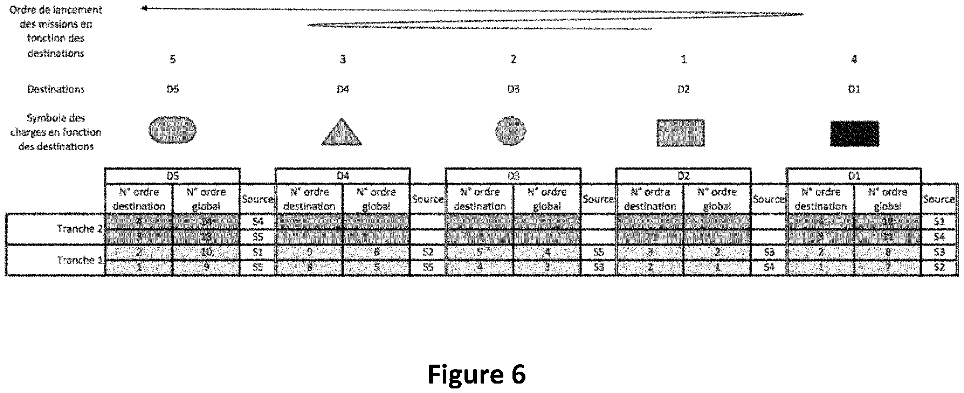

Le système de pilotage 90 est configuré pour traiter des commandes listant chacune des charges à extraire des sources et à fournir dans un ordre de destination croissant donné à une destination donnée. Il est également configuré pour définir un ordre global croissant pour les charges listées dans les commandes (voir ci-après la description de la figure 6). Enfin, il est configuré pour garantir, pour chaque source, que des charges sortantes respectent l'ordre global croissant et les ordres de destination croissants associés aux commandes.

Une charge est donc associée à deux numéros d'ordre :
- un numéro d'ordre global, au sein de l'ordre global défini pour l'ensemble des charges sortant de l'ensemble des sources, et
- un numéro d'ordre de destination, au sein d'un ordre de destination défini pour des charges listées dans une commande donnée.

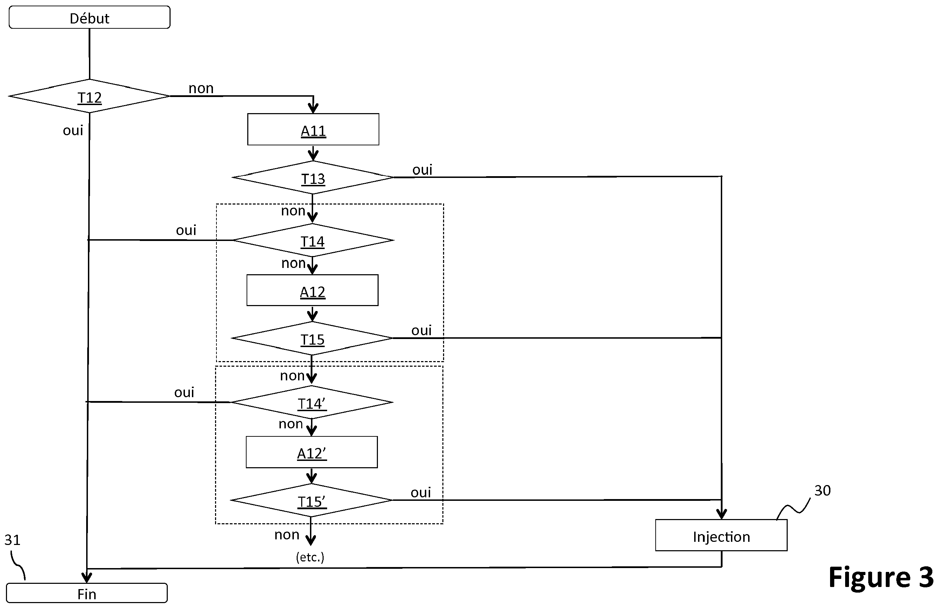

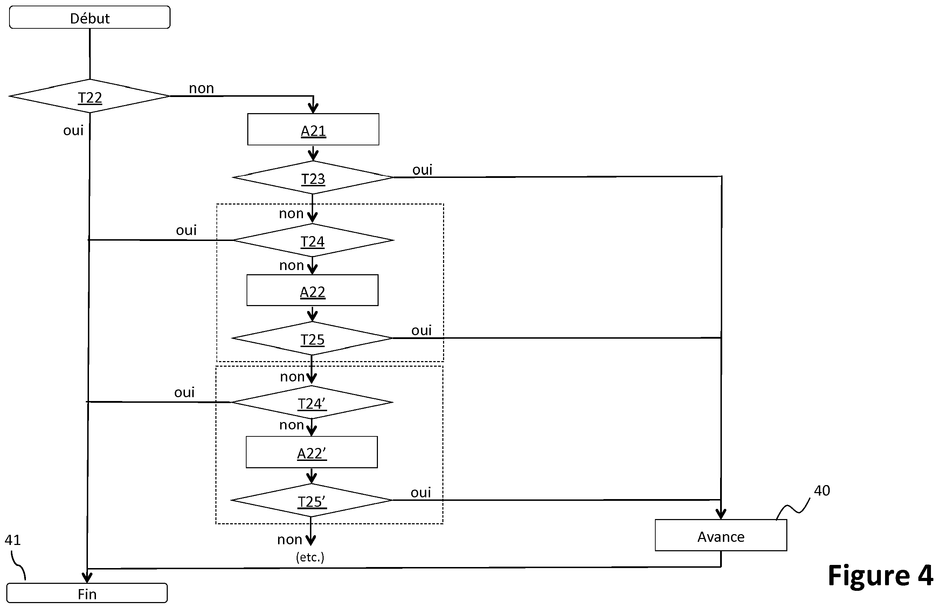

Le système de pilotage 90 met en oeuvre un procédé de séquencement de charges qui, dans un mode de réalisation particulier de l'invention, comprend les algorithmes suivants pour chacun des noeuds collectant des charges sortant des sources, sauf celui le plus en amont des destinations (c'est-à-dire, dans le système de la figure 2, pour chacun des noeuds N2 à N5, mais pas pour le noeud N1) :
- un algorithme d'analyse d'injection (voir figure 3), pour décider si une charge C ayant un numéro d'ordre de destination donné pour une destination donnée peut être injectée sur le collecteur en aval du noeud analysé ; et
- une algorithme d'analyse d'avance (voir figure 4), pour décider si une charge C', provenant d'un noeud en amont du noeud analysé et ayant un numéro d'ordre de destination donné pour une destination donnée, peut être avancée sur le collecteur en aval du noeud analysé.

Pour chacun des noeuds N2 à N5, l'ordre d'exécution des algorithmes d'analyse d'injection et d'analyse d'avance est quelconque. Pour chacun des noeuds N2 à N5, le système de pilotage 90 exécute par exemple chacun de ces deux algorithmes à intervalles de temps réguliers et/ou sur détection d'un événement (par exemple l'arrivée d'une nouvelle charge).

Pour le noeud N1, chaque charge qui se présente (en provenance de la source S1) est injectée sans condition d'ordre. Par ailleurs, la question de l'avance d'une charge ne se pose pour le noeud N1 (pas de noeud en amont).

On présente maintenant, en relation avec la **figure 3**, le détail de l'algorithme d'analyse d'injection de charge, dans un mode de réalisation particulier du procédé de séquencement de charges de l'invention.

Dans une étape T12, le système de pilotage effectue un premier test d'injection pour déterminer s'il existe, en amont du noeud analysé, sur le collecteur ou parmi des charges à collecter par au moins un noeud en amont du noeud analysé, au moins une charge ayant un numéro d'ordre de destination inférieur au numéro d'ordre de destination donné.

En cas de réponse positive au premier test d'injection (T12), le système de pilotage décide une non injection de la charge C (passage direct à une étape de fin 31), sinon il effectue les étapes suivantes :
- création (étape A11), parmi des charges à collecter par au moins un noeud en aval du noeud analysé, d'une liste LI1 de charges ayant un numéro d'ordre de destination inférieur au numéro d'ordre de destination donné et d'une liste LI2 de charges qui sont chacune intercalée entre une charge de la liste LI1 et le collecteur ; et
- deuxième test d'injection (étape T13) pour déterminer si une des première et deuxième conditions d'injection suivantes est vérifiée : la première condition d'injection étant que la liste LI1 est vide ; la deuxième condition d'injection étant que la liste LI1 n'est pas vide et que la liste LI2 est vide.

Si une des première et deuxième conditions d'injection est vérifiée (réponse positive à l'étape T13), le système de pilotage passe à une étape 30 d'injection de la charge C puis à une étape de fin 31.

Sinon (c'est-à-dire si aucune des première et deuxième conditions d'injection n'est vérifiée) (réponse négative à l'étape T13), le système de pilotage passe à une étape T14 dans laquelle il effectue un troisième test d'injection pour déterminer s'il existe, en amont du noeud analysé, sur le collecteur ou parmi des charges à collecter par au moins un noeud en amont du noeud analysé, au moins une charge ayant un numéro d'ordre de destination inférieur à un numéro d'ordre de destination possédé par une charge de la liste LI2 et pour une même destination.

En cas de réponse positive au troisième test d'injection (T14), le système de pilotage décide une non injection de la charge C (passage direct à l'étape de fin 31), sinon il effectue les étapes suivantes :
- création (étape A12), parmi des charges à collecter par au moins un noeud en aval du noeud analysé, d'une liste LI3 de charges ayant un numéro d'ordre de destination inférieur à un numéro d'ordre de destination possédé par une charge de la liste LI2 et pour une même destination, et d'une liste LI4 de charges qui sont chacune intercalée entre une charge de la liste LI3 et le collecteur ; et
- quatrième test d'injection (étape T15) pour déterminer si une des troisième et quatrième conditions d'injection suivantes est vérifiée : la troisième condition d'injection étant que la liste LI3 est vide ; la quatrième condition d'injection étant que la liste LI3 n'est pas vide et que la liste LI4 est vide.

Si une des troisième et quatrième conditions d'injection est vérifiée (réponse positive à l'étape T15), le système de pilotage passe à l'étape 30 d'injection de la charge C puis à l'étape de fin 31.

Sinon (c'est-à-dire si aucune des troisième et quatrième conditions d'injection n'est vérifiée) (réponse négative à l'étape T15), le système de pilotage effectue au moins une nouvelle itération des étapes T14, A12 et T15, en prenant comme liste LI2 pour chaque nouvelle itération la liste LI4 de l'itération précédente. Sur la figure 3, une seule nouvelle itération est représentée, avec les notations T14', A12' et T15'.

Diverses variantes de l'algorithme d'analyse d'injection de charge de la figure 3 sont possibles, qui sont moins performantes mais nécessitent moins de ressources de traitement :
- dans une première variante, en cas de réponse négative à l'étape T13, le système de pilotage décide directement une non injection de la charge C (passage direct à l'étape de fin 31) ;
- dans une deuxième variante, en cas de réponse négative à l'étape T15, le système de pilotage décide directement une non injection de la charge C (passage direct à l'étape de fin 31) ;
- dans une troisième variante, en cas de réponse négative à l'étape T15, le système de pilotage effectue un nombre prédéterminé k (par exemple k=1) de nouvelle itération des étapes T14, A12 et T15, en prenant comme liste LI2 pour chaque nouvelle itération la liste LI4 de l'itération précédente.

On présente maintenant, en relation avec la **figure 4**, le détail de l'algorithme d'analyse d'avance de charge, dans un mode de réalisation particulier du procédé de séquencement de charges de l'invention.

Dans une étape T22, le système de pilotage effectue un premier test d'avance pour déterminer s'il existe, parmi des charges à collecter par le noeud analysé, au moins une charge ayant un numéro d'ordre de destination inférieur au numéro d'ordre de destination donné.

En cas de réponse positive au premier test d'avance (T22), le système de pilotage décide une non avance de la charge C' (passage direct à l'étape de fin 41), sinon il effectue les étapes suivantes :
- création (étape A21), parmi des charges à collecter par au moins un noeud en aval du noeud analysé, d'une liste LA1 de charges ayant un numéro d'ordre de destination inférieur au numéro d'ordre de destination donné, et d'une liste LA2 de charges qui sont chacune intercalée entre une charge de la liste LA1 et le collecteur ; et
- deuxième test d'avance (étape T23) pour déterminer si une des première et deuxième conditions d'avance suivantes est vérifiée : la première condition d'avance étant que la liste LA1 est vide ; la deuxième condition d'avance étant que la liste LA1 n'est pas vide et que la liste LA2 est vide.

Si une des première et deuxième conditions d'avance est vérifiée (réponse positive à l'étape T23), le système de pilotage passe à une étape 40 d'avance de la charge C' puis à une étape de fin 31.

Sinon (c'est-à-dire si aucune des première et deuxième conditions d'avance n'est vérifiée) (réponse négative à l'étape T23), le système de pilotage passe à une étape T24 dans laquelle il effectue un troisième test d'avance pour déterminer s'il existe, parmi des charges à collecter par le noeud analysé, au moins une charge ayant un numéro d'ordre de destination inférieur à un numéro d'ordre de destination possédé par une charge de la liste LA2 et pour une même destination.

En cas de réponse positive au troisième test d'avance (T24), le système de pilotage décide une non avance de la charge C' (passage direct à l'étape de fin 41), sinon il effectue les étapes suivantes :
- création (étape A22), parmi des charges à collecter par au moins un noeud en aval du noeud analysé, d'une liste LA3 contenant des charges ayant un numéro d'ordre de destination inférieur à un numéro d'ordre de destination possédé par une charge de la liste LA2 et pour une même destination, et d'une liste LA4 contenant des charges qui sont chacune intercalée entre une charge de la liste LA3 et le collecteur ;
- quatrième test d'avance (étape T25) pour déterminer si une des troisième et quatrième conditions d'avance suivantes est vérifiée : la troisième condition d'avance étant que la liste LA3 est vide ; la quatrième condition d'avance étant que la liste LA3 n'est pas vide et que la liste LA4 est vide.

Si une des troisième et quatrième conditions d'avance est vérifiée (réponse positive à l'étape T25), le système de pilotage passe à l'étape 40 d'avance de la charge C' puis à l'étape de fin 41.

Sinon (c'est-à-dire si aucune des troisième et quatrième conditions d'avance n'est vérifiée) (réponse négative à l'étape T25), le système de pilotage effectue au moins une nouvelle itération des étapes T24, A22 et T25, en prenant comme liste LA2 pour chaque nouvelle itération la liste LA4 de l'itération précédente. Sur la figure 4, une seule nouvelle itération est représentée, avec les notations T24', A22' et T25'.

Diverses variantes de l'algorithme d'analyse d'avance de charge de la figure 4 sont possibles, qui sont moins performantes mais nécessitent moins de ressources de traitement :
- dans une première variante, en cas de réponse négative à l'étape T23, le système de pilotage décide directement une non avance de la charge C' (passage direct à l'étape de fin 41) ;
- dans une deuxième variante, en cas de réponse négative à l'étape T25, le système de pilotage décide directement une non avance de la charge C' (passage direct à l'étape de fin 41) ;
- dans une troisième variante, en cas de réponse négative à l'étape T25, le système de pilotage effectue un nombre prédéterminé k (par exemple k=1) de nouvelle itération des étapes T24, A22 et T25, en prenant comme liste LA2 pour chaque nouvelle itération la liste LA4 de l'itération précédente.

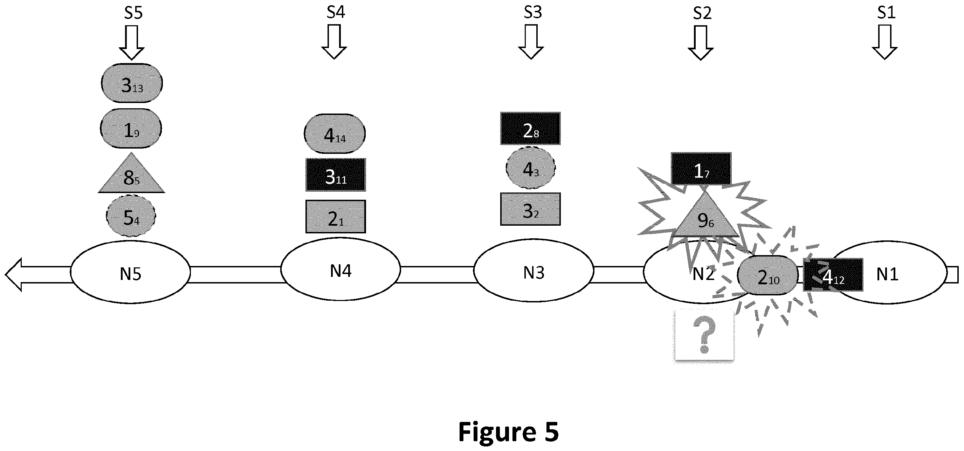

La **figure 5** illustre un premier exemple de contexte d'exécution de l'algorithme d'analyse d'injection de la figure 3 (au noeud N2 pour la charge référencée 9₆) et de l'algorithme d'analyse d'avance de la figure 4 (au noeud N2 pour la charge référencée 2₁₀). La **figure 6** illustre et explicite les notions de mission, numéro d'ordre de destination et numéro d'ordre global, en rapport avec les charges du contexte d'exécution de la figure 5.

Sur la figure 5, chaque charge est représentée par un couple « forme/couleur de fond » dans lequel apparaissent deux chiffres (l'un en taille normale, qui est le numéro d'ordre de destination de la charge, et l'autre en indice, qui est le numéro d'ordre global de la charge). Chaque couple «forme/couleur de fond » est spécifique à une des destinations (comme illustré sur la figure 6) : « rectangle / fond noir » pour la destination D1 ; « rectangle / fond gris » pour la destination D2 ; « cercle / fond gris » pour la destination D3 ; « triangle / fond gris » pour la destination D4 ; et « ovale / fond gris » pour la destination D5.

Le système de pilotage lance des missions visant chacune à gérer le déplacement d'une charge depuis une source jusqu'à une destination. L'ordre des missions correspond à l'ordre global des charges. Comme illustré sur la figure 6, on suppose que les missions sont réparties par tranche. Dans chaque tranche, l'ordre de lancement des missions est prédéterminé en fonction des destinations, et pour chaque destination il y a une quantité maximale de missions. Ainsi, dans l'exemple de la figure 5, l'ordre de lancement des missions dans chaque tranche correspond à l'ordre suivant des destinations : D2, D3, D4, D1 et D5, et pour chaque destination il y a au maximum deux charges. L'ordre global des charges est le suivant :
- pour la première tranche : 2₁ (de S4 vers D2), 3₂ (de S3 vers D2), 4₃ (de S3 vers D3), 5₄ (de S5 vers D3), 8₅ (de S5 vers D4), 9₆ (de S2 vers D4), 1₇ (de S2 vers D1), 2₈ (de S3 vers D1), 1₉ (de S5 vers D5) et 2₁₀ (de S1 vers D5) ;
- pour la deuxième tranche : 3₁₁ (de S4 vers D1), 4₁₂ (de S1 vers D1), 3₁₃ (de S5 vers D5) et 4₁₄ (de S4 vers D5).

A titre d'exemple, on détaille maintenant l'exécution de l'algorithme d'analyse d'injection de la figure 3, pour décider si la charge 9₆ (ayant le numéro d'ordre global 6 et le numéro d'ordre de destination 9 pour la destination D4) peut être injectée sur le collecteur, en aval du noeud N2 :
- étape T12 : réponse négative, donc passage à l'étape A11 ;
- étape A11 : la liste LI1 comprend la charge 8₅ et la liste LI2 comprend la charge 5₄ ;
- étape T13 : réponse négative, donc passage à l'étape T14 ;
- étape T14 : réponse négative, donc passage à l'étape A12 ;
- étape A12 : la liste LI3 comprend la charge 4₃ et la liste LI4 comprend la charge 3₂ ;
- étape T15 : réponse négative, donc passage à l'étape T14' ;
- étape T14' : réponse négative, donc passage à l'étape A12' ;
- étape A12' : la liste LI3 comprend la charge 2₁ et la liste LI4 est vide ;
- étape T15' : réponse positive, donc la charge 9₆ est injectée sur le collecteur (en aval du noeud N2).

A titre d'exemple, on détaille maintenant l'exécution de l'algorithme d'avance de la figure 4, pour décider si la charge 2₁₀ (ayant le numéro d'ordre global 10 et le numéro d'ordre de destination 2 pour la destination D5) peut être avancée sur le collecteur, en aval du noeud N2 :
- étape T22 : réponse négative, donc passage à l'étape A21 ;
- étape A21 : la liste LA1 comprend la charge 1₉ et la liste LA2 comprend les charges 8₅ et 5₄ ;
- étape T23 : réponse négative, donc passage à l'étape T24 ;
- étape T24 : réponse négative, donc passage à l'étape A22 ;
- étape A22 : la liste LA3 comprend la charge 4₃ et la liste LA4 comprend la charge 3₂ ;
- étape T25 : réponse négative, donc passage à l'étape T24' ;
- étape T24' : réponse négative, donc passage à l'étape A22' ;
- étape A22' : la liste LA3 comprend la charge 2₁ et la liste LA4 est vide ;
- étape T25' : réponse positive, donc la charge 2₁₀ est avancée sur le collecteur (en aval du noeud N2).

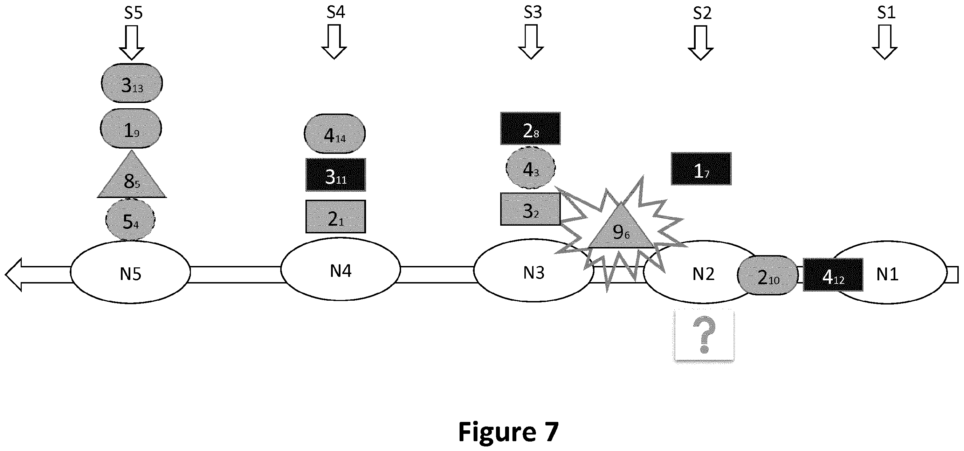

La **figure 7** illustre un deuxième exemple de contexte d'exécution de l'algorithme d'analyse d'avance de la figure 4 (au noeud N3 pour la charge référencée 9₆). Par rapport à la figure 5, on se place à un instant ultérieur, en supposant que la charge 9₆ a été injectée sur le collecteur (en aval du noeud N2). On détaille maintenant l'exécution de l'algorithme d'avance de la figure 4, pour décider si la charge 9₆ peut être avancée sur le collecteur, en aval du noeud N3 :
- étape T22 : réponse négative, donc passage à l'étape A21 ;
- étape A21 : la liste LA1 comprend la charge 8₅ et la liste LA2 comprend la charge 5₄ ;
- étape T23 : réponse négative, donc passage à l'étape T24 ;
- étape T24 : réponse positive (il y a la charge 4₃ qui arrive de la source S3 et qui n'a pas encore été collectée par le noeud N3), donc la charge 9₆ ne peut pas être avancée sur le collecteur (pas d'avance tant que la charge 4₃ n'a pas été injectée sur le collecteur, en aval du noeud N3).

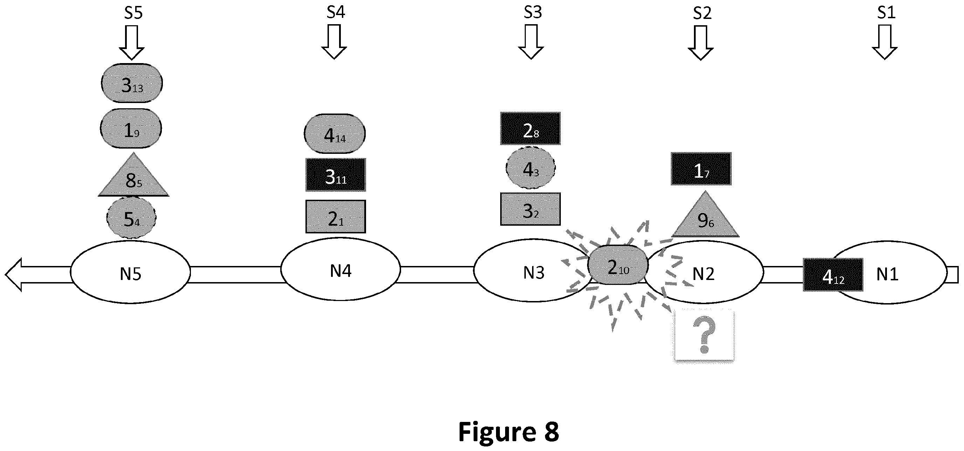

La **figure 8** illustre un troisième exemple de contexte d'exécution de l'algorithme d'analyse d'avance de la figure 4 (au noeud N3 pour la charge référencée 2₁₀). Par rapport à la figure 5, on se place à un instant ultérieur, en supposant que la charge 2₁₀ a été avancée sur le collecteur (en aval du noeud N2). On détaille maintenant l'exécution de l'algorithme d'avance de la figure 4, pour décider si la charge 2₁₀ peut être avancée sur le collecteur, en aval du noeud N3 :
- étape T22 : réponse négative, donc passage à l'étape A21 ;
- étape A21 : la liste LA1 comprend la charge 1₉ et la liste LA2 comprend les charges 8₅ et 5₄ ;
- étape T23 : réponse négative, donc passage à l'étape T24 ;
- étape T24 : réponse positive (il y a la charge 4₃ qui arrive de la source S3 et qui n'a pas encore été collectée par le noeud N3), donc la charge 2₁₀ ne peut pas être avancée sur le collecteur (pas d'avance tant que la charge 4₃ n'a pas été injectée sur le collecteur, en aval du noeud N3).

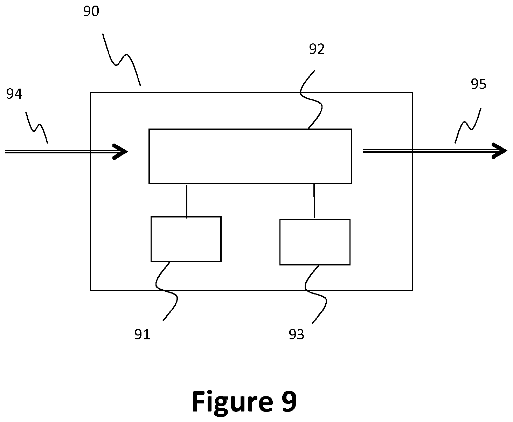

La **figure 9** présente la structure du système de pilotage 90 selon un mode de réalisation particulier de l'invention. Ce système de pilotage comprend une mémoire vive 93 (par exemple une mémoire RAM), une unité de traitement 91, équipée par exemple d'un processeur, et pilotée par un programme d'ordinateur stocké dans une mémoire morte 92 (par exemple une mémoire ROM ou un disque dur).

A l'initialisation, les instructions de code du programme d'ordinateur sont par exemple chargées dans la mémoire vive 93 avant d'être exécutées par le processeur de l'unité de traitement 91, pour mettre en oeuvre le procédé de séquencement de charges de l'invention. L'unité de traitement 91 reçoit en entrée des commandes 94. Le processeur de l'unité de traitement 91 traite les commandes et génère en sortie des instructions ou commandes 95 permettant de piloter (commander) différents éléments compris dans le système de distribution automatisé, notamment les sources S1 à S5, les dispositifs tampons sources de type FIFO F1 à F5, le collecteur 1, les destinations D1 à D5 et les dispositifs tampons destinations de type FIFO F1' à F5'.

Cette figure 9 illustre seulement une manière particulière, parmi plusieurs possibles, de réaliser la technique de l'invention, dans l'un quelconque de ses modes de réalisation. En effet, le système de pilotage se réalise indifféremment sur une machine de calcul reprogrammable (par exemple un ordinateur PC, un processeur DSP, un microcontrôleur, etc.) exécutant un programme comprenant une séquence d'instructions, ou sur une machine de calcul dédiée (par exemple un ensemble de portes logiques comme un FPGA ou un ASIC, ou tout autre module matériel).

Dans le cas où le système de pilotage est réalisé avec une machine de calcul reprogrammable, le programme correspondant (c'est-à-dire la séquence d'instructions) peut être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. Procédé de séquencement de charges dans un système de distribution automatisé comprenant un système de pilotage (90) et les autres éléments suivants : des sources (S1-S5), au moins une destination (D1-D5) et un collecteur (70) configuré pour transporter des charges jusqu'à ladite au moins une destination et comprenant une pluralité de noeuds successifs (N1-N5) configurés chacun pour collecter des charges sortant d'une des sources ; le système de pilotage (90) étant configuré pour traiter des commandes listant chacune des charges à extraire des sources et à fournir dans un ordre de destination croissant donné à une destination donnée, définir un ordre global croissant pour les charges listées dans les commandes et garantir pour chaque source que des charges sortantes respectent l'ordre global croissant et les ordres de destination croissants associés aux commandes, ledit procédé étant exécuté par le système de pilotage et étant **caractérisé en ce qu'**il comprend, pour au moins un noeud analysé, une étape d'analyse d'injection comprenant les étapes suivantes, pour décider si une charge C ayant un numéro d'ordre de destination donné pour une destination donnée peut être injectée sur le collecteur :
a) premier test d'injection (T12) pour déterminer s'il existe, en amont du noeud analysé, sur le collecteur ou parmi des charges à collecter par au moins un noeud en amont du noeud analysé, au moins une charge ayant un numéro d'ordre de destination inférieur au numéro d'ordre de destination donné ;
b) en cas de réponse positive au premier test d'injection, le système de pilotage prend une décision de non injection de la charge C et commande les autres éléments compris dans le système de distribution automatisé pour appliquer la décision de non injection de la charge C, sinon :
- création (A11), parmi des charges à collecter par au moins un noeud en aval du noeud analysé, d'une liste LI1 de charges ayant un numéro d'ordre de destination inférieur au numéro d'ordre de destination donné et d'une liste LI2 de charges qui sont chacune intercalée entre une charge de la liste LI1 et le collecteur ;
- deuxième test d'injection (T13) pour déterminer si une des première et deuxième conditions d'injection suivantes est vérifiée : la première condition d'injection étant que la liste LI1 est vide ; la deuxième condition d'injection étant que la liste LI1 n'est pas vide et que la liste LI2 est vide ;
- si une des première et deuxième conditions d'injection est vérifiée, le système de pilotage prend une décision d'injection (30) de la charge C et commande les autres éléments compris dans le système de distribution automatisé pour appliquer la décision d'injection de la charge C.

2. Procédé selon la revendication 1, **caractérisé en ce que**, si aucune des première et deuxième conditions d'injection n'est vérifiée, l'étape d'analyse d'injection comprend :
a') troisième test d'injection (T14) pour déterminer s'il existe, en amont du noeud analysé, sur le collecteur ou parmi des charges à collecter par au moins un noeud en amont du noeud analysé, au moins une charge ayant un numéro d'ordre de destination inférieur à un numéro d'ordre de destination possédé par une charge de la liste LI2 et pour une même destination ;
b') en cas de réponse positive au troisième test d'injection, le système de pilotage prend une décision de non injection de la charge C et commande les autres éléments compris dans le système de distribution automatisé pour appliquer la décision de non injection de la charge C, sinon :
* création (A12), parmi des charges à collecter par au moins un noeud en aval du noeud analysé, d'une liste LI3 de charges ayant un numéro d'ordre de destination inférieur à un numéro d'ordre de destination possédé par une charge de la liste LI2 et pour une même destination, et d'une liste LI4 de charges qui sont chacune intercalée entre une charge de la liste LI3 et le collecteur ;
* quatrième test d'injection (T15) pour déterminer si une des troisième et quatrième conditions d'injection suivantes est vérifiée : la troisième condition d'injection étant que la liste LI3 est vide ; la quatrième condition d'injection étant que la liste LI3 n'est pas vide et que la liste LI4 est vide ;
* si une des troisième et quatrième conditions d'injection est vérifiée, le système de pilotage prend une décision d'injection (30) de la charge C et commande les autres éléments compris dans le système de distribution automatisé pour appliquer la décision d'injection de la charge C.

3. Procédé selon la revendication 2, **caractérisé en ce que**, si aucune des troisième et quatrième conditions d'injection n'est vérifiée, l'étape d'analyse d'injection comprend au moins une nouvelle itération des étapes a') et b'), en prenant comme liste LI2 pour chaque nouvelle itération la liste LI4 de l'itération précédente.

4. Procédé selon l'une quelconque des revendications 1 à 3, **caractérisé en ce que** l'étape d'analyse d'injection est effectuée pour chacun des noeuds sauf un premier noeud le plus en amont des destinations.

5. Procédé selon l'une quelconque des revendications 1 à 4, **caractérisé en ce qu'**il comprend, pour au moins un noeud analysé, une étape d'analyse d'avance comprenant les étapes suivantes, pour décider si une charge C', provenant d'un noeud en amont du noeud analysé et ayant un numéro d'ordre de destination donné pour une destination donnée, peut être avancée sur le collecteur :
1) premier test d'avance (T22) pour déterminer s'il existe, parmi des charges à collecter par le noeud analysé, au moins une charge ayant un numéro d'ordre de destination inférieur au numéro d'ordre de destination donné ;
2) en cas de réponse positive au premier test d'avance, le système de pilotage prend une décision de non avance de la charge C' et commande les autres éléments compris dans le système de distribution automatisé pour appliquer la décision de non avance de la charge C', sinon :
- création (A21), parmi des charges à collecter par au moins un noeud en aval du noeud analysé, d'une liste LA1 de charges ayant un numéro d'ordre de destination inférieur au numéro d'ordre de destination donné, et d'une liste LA2 de charges qui sont chacune intercalée entre une charge de la liste LA1 et le collecteur ;
- deuxième test d'avance (T23) pour déterminer si une des première et deuxième conditions d'avance suivantes est vérifiée : la première condition d'avance étant que la liste LA1 est vide ; la deuxième condition d'avance étant que la liste LA1 n'est pas vide et que la liste LA2 est vide ;
- si une des première et deuxième conditions d'avance est vérifiée, le système de pilotage prend une décision d'avance (40) de la charge C' et commande les autres éléments compris dans le système de distribution automatisé pour appliquer la décision d'avance de la charge C'.

6. Procédé selon la revendication 5, **caractérisé en ce que**, si aucune des première et deuxième conditions d'avance n'est vérifiée, l'étape d'analyse d'avance comprend :
1') troisième test d'avance (T24) pour déterminer s'il existe, parmi des charges à collecter par le noeud analysé, au moins une charge ayant un numéro d'ordre de destination inférieur à un numéro d'ordre de destination possédé par une charge de la liste LA2 et pour une même destination ;
2') en cas de réponse positive au troisième test d'avance, le système de pilotage prend une décision de non avance de la charge C' et commande les autres éléments compris dans le système de distribution automatisé pour appliquer la décision de non avance de la charge C', sinon :
* création (A22), parmi des charges à collecter par au moins un noeud en aval du noeud analysé, d'une liste LA3 contenant des charges ayant un numéro d'ordre de destination inférieur à un numéro d'ordre de destination possédé par une charge de la liste LA2 et pour une même destination, et d'une liste LA4 contenant des charges qui sont chacune intercalée entre une charge de la liste LA3 et le collecteur ;
* quatrième test d'avance (T25) pour déterminer si une des troisième et quatrième conditions d'avance suivantes est vérifiée : la troisième condition d'avance étant que la liste LA3 est vide ; la quatrième condition d'avance étant que la liste LA3 n'est pas vide et que la liste LA4 est vide ;
* si une des troisième et quatrième conditions d'avance est vérifiée, le système de pilotage prend une décision d'avance (40) de la charge C' et commande les autres éléments compris dans le système de distribution automatisé pour appliquer la décision d'avance de la charge C'.

7. Procédé selon la revendication 6, **caractérisé en ce que**, si aucune des troisième et quatrième conditions d'avance n'est vérifiée, l'étape d'analyse d'avance comprend au moins une nouvelle itération des étapes 1') et 2'), en prenant comme liste LA2 pour chaque nouvelle itération la liste LA4 de l'itération précédente.

8. Procédé selon l'une quelconque des revendications 5 à 7, **caractérisé en ce que** l'étape d'analyse d'avance est effectuée pour chacun des noeuds sauf ledit premier noeud le plus en amont des destinations.

9. Produit programme d'ordinateur comprenant des instructions de code de programme pour la mise en oeuvre du procédé selon l'une quelconque des revendications 1 à 8, lorsque ledit programme est exécuté sur un ordinateur.

10. Médium de stockage lisible par ordinateur et non transitoire, stockant un produit programme d'ordinateur selon la revendication 9.

## Patentansprüche

1. Verfahren zur Taktung von Ladungen in einem automatisierten Verteilungssystem, umfassend ein Steuersystem (90) und die folgenden anderen Elemente: Quellen (S1-S5), mindestens ein Ziel (D1-D5) und einen Sammler (70), der konfiguriert ist, um Ladungen zu dem mindestens einen Zielort zu transportieren und mehrere aufeinanderfolgende Knoten (N1-N5) aufweist, die jeweils konfiguriert sind, um Ladungen zu sammeln, die von einer der Quellen ausgehen, wobei das Steuersystem (90) konfiguriert ist, um Bestellungen zu bearbeiten, die jeweils Ladungen auflisten, die aus den Quellen zu entnehmen sind und in einer bestimmten aufsteigenden Zielreihenfolge an einen bestimmten Zielort zu liefern sind, eine aufsteigende globale Reihenfolge für die Ladungen zu definieren, die in den Bestellungen aufgelistet sind, und für jede Quelle zu garantieren, dass ausgehende Ladungen die aufsteigende globale Reihenfolge und die aufsteigenden Zielreihenfolgen, die mit den Bestellungen verbunden sind, einhalten, wobei das Verfahren von dem Steuersystem durchgeführt wird und **dadurch gekennzeichnet ist, dass** es für mindestens einen analysierten Knoten einen Analyseschritt der Einbringung aufweist, umfassend die folgenden Schritte, um zu entscheiden, ob eine Ladung C mit einer bestimmten laufende Zielort-Nummer für einen bestimmten Zielort auf den Sammler eingebracht werden kann:
a) einen ersten Einbringungstest (T12), um zu bestimmen, ob vorgelagert vor dem analysierten Knoten auf dem Sammler oder unter Ladungen, die von mindestens einem Knoten vorgelagert vor dem analysierten Knoten zu sammeln sind, mindestens eine Ladung vorhanden ist, die eine laufende Zielort-Nummer hat, die kleiner als die bestimmte laufende Zielort-Nummer ist,
b) im Falle einer positiven Antwort auf den Einbringungstest trifft das Steuersystem eine Entscheidung, die Ladung C nicht einzubringen und steuert die anderen Elemente, die in dem automatisierten Verteilungssystem enthalten sind, um die Entscheidung anzuwenden, die Ladung C nicht einzubringen, anderenfalls:
- Erstellen (A11) unter Ladungen, die von mindestens einem Knoten nachgelagert nach dem analysierten Knoten zu sammeln sind, von einer Liste LI1 von Ladungen, die eine laufende Zielort-Nummer haben, die kleiner als die bestimmte laufende Zielort-Nummer ist, und von einer Liste LI2 von Ladungen, die jeweils zwischen einer Ladung der Liste LI1 und dem Sammler angeordnet sind,
- einen zweiten Einbringungstest (T13), um zu bestimmen, ob eine der folgenden ersten und der folgenden zweiten Einbringungsbedingung erfüllt wird: wobei die erste Einbringungsbedingung darin besteht, dass die Liste LI1 leer ist, wobei die zweite Einbringungsbedingung darin besteht, dass die Liste LI1 nicht leer ist und dass die Liste LI2 leer ist,
- wenn eine der ersten und der zweiten Einbringungsbedingung erfüllt wird, trifft das Steuersystem eine Entscheidung der Einbringung (30) der Ladung C und steuert die anderen Elemente, die in dem automatisierten Verteilungssystem enthalten sind, um die Entscheidung der Einbringung der Ladung C anzuwenden.

2. Verfahren nach Anspruch 1, **dadurch gekennzeichnet, dass**, wenn keine der ersten und der zweiten Einbringungsbedingung erfüllt wird, der Analyseschritt der Einbringung aufweist:
a') einen dritten Einbringungstest (T14), um zu bestimmen, ob vorgelagert vor dem analysierten Knoten auf dem Sammler oder unter Ladungen, die von mindestens einem Knoten vorgelagert vor dem analysierten Knoten zu sammeln sind, mindestens eine Ladung, die eine laufende Zielort-Nummer hat, die kleiner als eine laufende Zielort-Nummer ist, die einer Ladung der Liste LI2 gehört, und für einen gleichen Zielort vorhanden ist,
b') im Falle einer positiven Antwort auf den dritten Einbringungstest trifft das Steuersystem eine Entscheidung, die Ladung C nicht einzubringen und steuert die anderen Elemente, die in dem automatisierten Verteilungssystem enthalten sind, um die Entscheidung anzuwenden, die Ladung C nicht einzubringen, anderenfalls:
* Erstellen (A12) unter Ladungen, die von mindestens einem Knoten nachgelagert nach dem analysierten Knoten zu sammeln sind, von einer Liste LI3 von Ladungen, die eine laufende Zielort-Nummer haben, die kleiner als eine laufende Zielort-Nummer ist, die einer Ladung der Liste LI2 gehört, und für einen gleichen Zielort, und von einer Liste LI4 von Ladungen, die jeweils zwischen einer Ladung der Liste LI3 und dem Sammler angeordnet sind,
* einen vierten Einbringungstest (T15), um zu bestimmen, ob eine der folgenden dritten und folgenden vierten Einbringungsbedingung erfüllt wird: wobei die dritte Einbringungsbedingung darin besteht, dass die Liste LI3 leer ist, wobei die vierte Einbringungsbedingung darin besteht, dass die Liste LI3 nicht leer ist und dass die Liste LI4 leer ist,
* wenn eine der dritten und der vierten Einbringungsbedingung erfüllt wird, trifft das Steuersystem eine Entscheidung der Einbringung (30) der Ladung C und steuert die anderen Elemente, die in dem automatisierten Verteilungssystem enthalten sind, um die Entscheidung der Einbringung der Ladung C anzuwenden.

3. Verfahren nach Anspruch 2, **dadurch gekennzeichnet, dass**, wenn keine der dritten und der vierten Einbringungsbedingung erfüllt wird, der Analyseschritt der Einbringung mindestens eine neue Wiederholung der Schritte a') und b') aufweist, indem als Liste LI2 für jede neue Wiederholung die Liste LI4 der vorhergehenden Wiederholung genommen wird.

4. Verfahren nach einem der Ansprüche 1 bis 3, **dadurch gekennzeichnet, dass** der Analyseschritt der Einbringung für jeden der Knoten mit Ausnahme eines ersten Knotens, der am weitesten vorgelagert vor den Zielorten liegt, durchgeführt wird.

5. Verfahren nach einem der Ansprüche 1 bis 4, **dadurch gekennzeichnet, dass** es für mindestens einen analysierten Knoten einen Analyseschritt des Vorschiebens aufweist, der die folgenden Schritte aufweist, um zu entscheiden, ob eine Ladung C', die von einem Knoten stammt, der dem analysierten Knoten vorgelagert ist, und eine bestimmte laufende Zielort-Nummer für einen bestimmten Zielort hat, auf den Sammler vorgeschoben werden kann:
1) einen ersten Vorschiebetest (T22), um zu bestimmen, ob unter Ladungen, die von dem analysierten Knoten zu sammeln sind, mindestens eine Ladung vorhanden ist, die eine laufende Zielort-Nummer hat, die kleiner als die bestimmte laufende Zielort-Nummer ist,
2) im Falle einer positiven Antwort auf den Vorschiebetest trifft das Steuersystem eine Entscheidung, die Ladung C' nicht vorzuschieben und steuert die anderen Elemente, die in dem automatisierten Verteilungssystem enthalten sind, um die Entscheidung anzuwenden, die Ladung C' nicht vorzuschieben, anderenfalls:
- Erstellen (A21) unter Ladungen, die von mindestens einem Knoten nachgelagert nach dem analysierten Knoten zu sammeln sind, von einer Liste LA1 von Ladungen, die eine laufende Zielort-Nummer haben, die kleiner als die bestimmte laufende Zielort-Nummer ist, und von einer Liste LA2 von Ladungen, die jeweils zwischen einer Ladung der Liste LA1 und dem Sammler angeordnet sind,
- einen zweiten Vorschiebetest (T23), um zu bestimmen, ob eine der folgenden ersten und der folgenden zweiten Vorschiebebedingung erfüllt wird: wobei die erste Vorschiebebedingung darin besteht, dass die Liste LA1 leer ist, wobei die zweite Vorschiebebedingung darin besteht, dass die Liste LA1 nicht leer ist und dass die Liste LA2 leer ist,
- wenn eine der ersten und der zweiten Vorschiebebedingung erfüllt wird, trifft das Steuersystem eine Entscheidung des Vorschiebens (40) der Ladung C' und steuert die anderen Elemente, die in dem automatisierten Verteilungssystem enthalten sind, um die Entscheidung des Vorschiebens der Ladung C'anzuwenden.

6. Verfahren nach Anspruch 5, **dadurch gekennzeichnet, dass**, wenn keine der ersten und der zweiten Vorschiebebedingung erfüllt wird, der Analyseschritt des Vorschiebens aufweist:
1') einen dritten Vorschiebetest (T24), um zu bestimmen, ob unter Ladungen, die von dem analysierten Knoten zu sammeln sind, mindestens eine Ladung, die eine laufende Zielort-Nummer hat, die kleiner als eine laufende Zielort-Nummer ist, die einer Ladung der Liste LA2 gehört, und für einen gleichen Zielort vorhanden ist,
2') im Falle einer positiven Antwort auf den dritten Vorschiebetest trifft das Steuersystem eine Entscheidung, die Ladung C' nicht vorzuschieben und steuert die anderen Elemente, die in dem automatisierten Verteilungssystem enthalten sind, um die Entscheidung anzuwenden, die Ladung C' nicht vorzuschieben, anderenfalls:
* Erstellen (A22) unter Ladungen, die von mindestens einem Knoten nachgelagert nach dem analysierten Knoten zu sammeln sind, von einer Liste LA3, die Ladungen enthält, die eine laufende Zielort-Nummer haben, die kleiner als eine laufende Zielort-Nummer ist, die einer Ladung der Liste LA2 gehört, und für einen gleichen Zielort, und von einer Liste LA4, die Ladungen enthält, die jeweils zwischen einer Ladung der Liste LA3 und dem Sammler angeordnet sind,
* einen vierten Vorschiebetest (T25), um zu bestimmen, ob eine derfolgenden dritten und der folgenden vierten Vorschiebebedingung erfüllt wird: wobei die dritte Vorschiebebedingung darin besteht, dass die Liste LA3 leer ist, wobei die vierte Vorschiebebedingung darin besteht, dass die Liste LA3 nicht leer ist und dass die Liste LA4 leer ist,
* wenn eine der dritten und der vierten Vorschiebebedingung erfüllt wird, trifft das Steuersystem eine Entscheidung des Vorschiebens (40) der Ladung C' und steuert die anderen Elemente, die in dem automatisierten Verteilungssystem enthalten sind, um die Entscheidung des Vorschiebens der Ladung C'anzuwenden.

7. Verfahren nach Anspruch 6, **dadurch gekennzeichnet, dass**, wenn keine der dritten und der vierten Vorschiebebedingung erfüllt wird, der Analyseschritt des Vorschiebens mindestens eine neue Wiederholung der Schritte 1') und 2') aufweist, indem als Liste LA2 für jede neue Wiederholung die Liste LA4 der vorhergehenden Wiederholung genommen wird.

8. Verfahren nach einem der Ansprüche 5 bis 7, **dadurch gekennzeichnet, dass** der Analyseschritt des Vorschiebens für jeden der Knoten mit Ausnahme des ersten Knotens, der am weitesten vorgelagert vor den Zielorten liegt, durchgeführt wird.

9. Computerprogrammprodukt, das Programmcodeanweisungen für das Umsetzen des Verfahrens nach einem der Ansprüche 1 bis 8 aufweist, wenn das Programm auf einem Computer ausgeführt wird.

10. Computerlesbares und nicht-transitorisches Aufzeichnungsmedium, das ein Computerprogrammprodukt nach Anspruch 9 speichert.

## Claims

1. Method for sequencing loads in an automated distribution system comprising a drive system (90) and the other following elements: sources (S1-S5), at least one destination (D1-D5) and a collector (70) configured to transport loads to said at least one destination and comprising a plurality of successive nodes (N1-N5) each configured to collect loads leaving one of the sources; the drive system (90) being configured to process commands each listing loads to be extracted from the sources and to be supplied in a given ascending destination order to a given destination, define an ascending overall order for the loads listed in the commands and ensure for each source that the leaving loads meet the ascending overall order and the ascending destination orders associated with the commands, said method being executed by the drive system and being **characterised in that** it comprises, for at least one analysed node, an injection analysis step comprising the following steps, to decide whether a load C having a given destination order number for a given destination can be injected on the collector:
a) first injection test (T12) to determine whether there is, upstream of the analysed node, on the collector or among the loads to be collected by at least one node upstream of the analysed node, at least one load having a destination order number less than the given destination order number;
b) in case of a positive response to the first injection test, the drive system makes a decision not to inject the load C and controls the other elements included in the automated distribution system to apply the decision not to inject the load C, otherwise:
- creating (A11), among the loads to be collected by at least one node downstream of the analysed node, a list LI1 of loads having a destination order number less than the given destination order number and a list LI2 of loads which are each interposed between a load of the list LI1 and the collector;
- second injection test (T13) to determine whether one of the first and second following injection conditions is verified: the first injection condition being that the list LI1 is empty; the second injection condition being that the list LI1 is not empty and the list LI2 is empty;
- if one of the first and second injection conditions is verified, the drive system makes a decision to inject (30) the load C and controls the other elements included in the automated distribution system to apply the decision to inject the load C.

2. The method according to claim 1, **characterised in that**, if none of the first and second injection conditions is verified, the injection analysis step comprises:
a') third injection test (T14) to determine whether there is, upstream of the analysed node, on the collector or among the loads to be collected by at least one node upstream of the analysed node, at least one load having a destination order number less than the destination order number owned by a load of the list LI2 and for a same destination;
b') in case of a positive response to the third injection test, the drive system makes a decision not to inject the load C and controls the other elements included in the automated distribution system to apply the decision not to inject the load C, otherwise:
*creating (A12), among the loads to be collected by at least one node downstream of the analysed node, a list LI3 of loads having a destination order number less than a destination order number owned by a load of the list LI2 and for a same destination, and a list LI4 of loads which are each interposed between a load of the list LI3 and the collector;
*fourth injection test (T15) to determine whether one of the third and fourth following injection conditions is verified: the third injection condition being that the list LI3 is empty; the fourth injection condition being that the list LI3 is not empty and the list LI4 is empty;
*if one of the third and fourth injection conditions is verified, the drive system makes a decision to inject (30) the load C and controls the other elements included in the automated distribution system to apply the decision to inject the load C.

3. The method according to claim 2, **characterised in that**, if none of the third and fourth injection conditions is verified, the injection analysis step comprises at least one new iteration of the steps a') and b'), by taking as the list LI2 for each new iteration the list LI4 of the preceding iteration.

4. The method according to any of claims 1 to 3, **characterised in that** the injection analysis step is performed for each of the nodes except for a first node the most upstream of the destinations.

5. The method according to any of claims 1 to 4, **characterised in that** it comprises, for at least one analysed node, an advance analysis step comprising the following steps, to decide whether a load C', from a node upstream of the analysed node and having a given destination order number for a given destination, can be advanced on the collector:
1) first advance test (T22) to determine whether there is, among loads to be collected by the analysed node, at least one load having a destination order number less than the given destination order number;
2) in case of a positive response to the first advance test, the drive system makes a decision not to advance the load C' and controls the other elements included in the automated distribution system to apply the decision not to advance the load C', otherwise:
- creating (A21), among loads to be collected by at least one node downstream of the analysed node, a list LA1 of loads having a destination order number less than the given destination order number, and a list LA2 of loads which are each interposed between a load of the list LA1 and the collector;
- second advance test (T23) to determine whether one of the first and second following advance conditions is verified: the first advance condition being that the list LA1 is empty; the second advance condition being that the list LA1 is not empty and the list LA2 is empty;
- if one of the first and second advance conditions is verified, the drive system makes a decision to advance (40) the load C' and controls the other elements included in the automated distribution system to apply the decision to advance the load C'.

6. The method according to claim 5, **characterised in that**, if none of the first and second advance conditions is verified, the advance analysis step comprises:
1') third advance test (T24) to determine whether there is, among loads to be collected by the analysed node, at least one load having a destination order number less than the destination order number owned by a load of the list LA2 and for a same destination;
2') in case of a positive response to the third advance test, the drive system makes a decision not to advance the load C' and controls the other elements included in the automated distribution system to apply the decision not to advance the load C', otherwise:
*creating (A22), among loads to be collected by at least one node downstream of the analysed node, a list LA3 containing loads having a destination order number less than a destination order number owned by a load of the list LA2 and for a same destination, and a list LA4 containing loads which are each interposed between a load of the list LA3 and the collector;
*fourth advance test (T25) to determine whether one of the third and fourth following advance conditions is verified: the third advance condition being that the list LA3 is empty; the fourth advance condition being that the list LA3 is not empty and the list LA4 is empty;
*if one of the third and fourth advance conditions is verified, the drive system makes a decision to advance (40) the load C' and controls the other elements included in the automated distribution system to apply the decision to advance the load C'.

7. The method according to claim 6, **characterised in that**, if none of the third and fourth advance conditions is verified, the advance analysis step comprises at least one new iteration of the steps 1') and 2'), by taking as the list LA2 for each new iteration the list LA4 of the preceding iteration.

8. The method according to any of claims 5 to 7, **characterised in that** the advance analysis step is performed for each of the nodes except for said first node the most upstream of the destinations.

9. A computer program product comprising program code instructions for implementing the method according to any of claims 1 to 8, when said program is executed on a computer.

10. A non-transient computer-readable storage medium, storing a computer program product according to claim 9.
